Europäisches Patentamt

European Patent Office

Office européen des brevets

(11) Veröffentlichungsnummer: **0 451 360 A2**

# (12) EUROPÄISCHE PATENTANMELDUNG

(21) Anmeldenummer: **90124753.6**

(22) Anmeldetag: **19.12.90**

(51) Int. Cl.⁵: **B23B 31/26**

(30) Priorität: **11.09.90 DE 4028775**
**28.03.90 DE 4009991**

(43) Veröffentlichungstag der Anmeldung:
**16.10.91 Patentblatt 91/42**

(84) Benannte Vertragsstaaten:
**AT CH ES FR GB IT LI SE**

(71) Anmelder: **Ott Maschinentechnik GmbH**
**Jägerstrasse 4-12**
**W-8960 Kempten(DE)**

(72) Erfinder: **Heel, Helmut**
**Andreas-Mayer-Strasse 82 1/8**
**W-8951 Lengenwang(DE)**
Erfinder: **Fauter, Manfred**
**Tannenweg 3**
**W-8967 Faistenoy(DE)**
Erfinder: **Mohr, Peter**
**Am Lindenbühl 24**
**W-8961 Wiggensbach(DE)**
Erfinder: **Friedl, Franz**
**Egatweg 7**
**W-8952 Marktoberdorf(DE)**
Erfinder: **Kettel, Hans**
**Erlenweg 12**
**W-7434 Riederich(DE)**

(74) Vertreter: **Liebau, Gerhard, Dipl.-Ing.**
**Birkenstrasse 39 Postfach 22 02 29**
**W-8900 Augsburg 22(DE)**

(54) **Spannvorrichtung zum Einspannen eines Werkzeuges in einem Werkzeugträger.**

㉗ Bei einer Spannvorrichtung zum Einspannen eines Werkzeuges (1) in einem Träger (2) ist am Werkzeug (1) ein hohler Zentrieransatz (3) und eine diesen umgebende Anlagefläche (4) vorgesehen. Eine im Träger (2) vorgesehene Werkzeugaufnahme (7) weist eine dem Zentrieransatz (3) angepaßte Aufnahmebohrung (8) und eine diese umgebende Stirnfläche (9) auf, an welche die Anlagefläche mittels einer Spannanordnung anpreßbar ist. Die Spannanordnung umfaßt eine koaxial zur Zentralachse (A) bewegliche Spannhülse (10) und einen entgegengesetzt zur Spannhülse (10) verschiebbaren Spannring (11), die beide mit einander zugekehrten Spannke- geln (12, 13) versehen sind. Der Spannring (11) ist mittels einer auf der Spannhülse (10) verschraubba- ren Spannmutter (20) auf dieser axial verschiebbar. Mehrere Spannklauen (14) umgehen die Spannhülse (10) und den Spannring (11) konzentrisch und stüt- zen sich jeweils mit einem Ende (14a, 14b) an deren Spannkegeln (12, 13) ab. Die Spannklauen (14) wei- sen an ihren beiden Enden (14a, 14b) Spannflächen (15, 16) auf, welche mit einer Konusfläche (17) der Werkzeugaufnahme (7) sowie einer entgegengesetzt zu dieser gerichteten Konusfläche (5) im Zentrieran- satz (3) zusammenwirken.

EP 0 451 360 A2

Fig.1

Die Erfindung betrifft eine Spannvorrichtung zum Einspannen eines Werkzeuges in einem Träger, insbesondere in einer Revolverscheibe einer Werkzeugmaschine, gemäß dem Oberbegriff des Anspruches 1 oder 2.

Bei einer derartigen bekannten Spannvorrichtung zum axialen Spannen zweier voneinander lösbarer Maschinenteile (DE 38 14 550 C1) ist zur Betätigung der Spannhülse eine axial verschiebbare Betätigungsstange vorgesehen. Bei dieser Betätigungsstange handelt es sich in der Regel um eine in einer Werkzeugmaschinenspindel angeordnete Zugstange, die durch ein Tellerfeder-Paket vom Werkzeug weggedrückt und zum Lösen der Spannvorrichtung mittels einer Kolben-Zylinder-Einheit entgegen der Kraft der Federanordnung bewegt werden kann. Durch Verschiebung der Spannhülse unter der Wirkung des Tellerfeder-Paketes werden die Spannklauen radial nach außen bewegt und legen sich einerseits an eine schräge Nutflanke im Innern des hohlen Zentrieransatzes und andererseits an eine Konusfläche der Werkzeugaufnahme an. Hierdurch wird ebenfalls eine axiale Einspannkraft erzeugt. Infolge der axial verschiebbaren Betätigungsstange und des auf sie einwirkenden Tellerfeder-Paketes sowie der Kolben-Zylinder-Einheit weist diese bekannte Spannvorrichtung jedoch eine größere Baulänge auf und ist deshalb insbesondere bei Revolverscheiben nicht einsetzbar. An derartigen Revolverscheiben sind nämlich eine Vielzahl von Werkzeugaufnahmen und Werkzeugen angeordnet, so daß dort sehr beengte Platzverhältnisse bestehen. Außerdem ist man bemüht, Revolverscheiben in axialer Richtung möglichst kurz zu gestalten.

Bei einer anderen bekannten Spannvorrichtung (DE 27 36 412 C2) sind als Spannglieder drei Verriegelungskugeln vorgesehen, die in entsprechenden Querbohrungen des Zentrieransatzes radial beweglich sind. Als Spannanordnung dient eine in einer zentralen Bohrung des Zentrieransatzes angeordnete, sich an den Verriegelungskugeln abstützende zentrale Druckkugel, die mittels unterschiedlich ausgestalteter Spanneinrichtungen in Richtung zum Werkzeug hin gedrückt werden kann. Hierdurch werden die Verriegelungskugeln radial nach außen gedrückt und drücken dabei auf die Konusfläche der Werkzeugaufnahme. Dies bewirkt eine Anpressung der Anlagefläche des Werkzeuges an die Stirnfläche. Infolge der zentral angeordneten Druckkugel und auf sie ebenfalls im Bereich der Zentralachse einwirkenden Betätigungseinrichtung , ist es nicht möglich, diese Spannvorrichtung für sogenannte angetriebene Werkzeuge zu verwenden. Derartige angetriebene Werkzeuge erfordern nämlich sowohl im Zentrieransatz als auch in der Werkzeugaufnahme einen zentralen Freiraum für die Hindurchführung einer Antriebswelle oder Antriebsstange, mit der das Werkzeug rotierend angetrieben bzw. auch verstellt werden kann. Die Verriegelungskugeln und die Druckkugel haben den Nachteil, daß Spannkräfte nur an drei Stellen punktförmig übertragen werden. Dies ergibt nicht nur an den Kugeln selbst sondern auch an der mit den Verriegelungskugeln zusammenwirkenden Konusfläche der Werkzeugaufnahme eine hohe spezifische Flächenpressung und damit auch einen verhältnismäßig großen Verschleiß. Wegen der hohen spezifischen Flächenpressung ist auch die maximale Spannkraft und damit die Kraft, mit der Anlagefläche und Stirnfläche aneinandergepreßt werden, gering. Darüber hinaus hat die bekannte Spannvorrichtung auch den Nachteil, daß ein wesentlicher Teil der Spannvorrichtung, nämlich die Kugeln, in dem Werkzeug selbst angeordnet sind. Es muß daher jedes einzelne Werkzeug mit derartigen Kugeln und entsprechenden Bohrungen und Halteeinrichtungen für die Kugeln ausgestattet sein, was die Herstellungskosten der Werkzeuge verteuert.

Der Erfindung liegt daher die Aufgabe zugrunde, eine Spannvorrichtung zum Einspannen eines Werkzeuges in einem Träger, insbesondere in einer Revolverscheibe einer Werkzeugmaschine, gemäß dem Oberbegriff des Anspruches 1 oder 2 zu schaffen, die sowohl im Zentrieransatz als auch in der Werkzeugaufnahme einen zentralen, durchgehenden Freiraum aufweist und somit für angetriebene Werkzeuge geeignet ist, die ferner eine hohe Spannkraft bei geringem Verschleiß ermöglicht und insbesondere in axialer Richtung möglichst kleine Bauabmessungen aufweist.

Dies wird gemäß einer ersten Lösung dadurch erreicht, daß die Spannanordnung ferner einen entgegengesetzt zur Spannhülse verschiebbaren Spannring umfaßt, der den zweiten Spannkegel trägt, welcher dem ersten Spannkegel zugekehrt ist, und daß der Spannring mittels einer auf der Spannhülse verschraubbaren Spannmutter relativ zur Spannhülse axial verschiebbar ist.

Eine zweite Lösung des der Erfindung zugrundeliegenden Problems besteht darin, daß die Spannhülse mittels einer auf ihr verschraubbaren, sich an einer gegenüber dem Träger bzw. der Werkzeugaufnahme ortsfesten Ringfläche abstützenden Spannmutter axial verschiebbar ist.

Diese neuartigen Spannvorrichtungen weisen jeweils innerhalb der sich in den Zentrieransatz erstreckenden Spannhülse einen genügend großen Freiraum auf, durch welchen eine Antriebswelle oder Antriebsstange für ein angetriebenes Werkzeug ohne weiteres hindurchgeführt werden kann.

Deswegen sind die neuen Spannvorrichtungen besonders für angetriebene Werkzeuge geeignet. Wenn gewünscht, kann dieser Freiraum auch für andere Einrichtungen, wie Elektronik, Elektrik, Zuführung von Kühlschmiermittel, Druckmedien, Luft und dgl. benutzt werden. Infolge der Spannmutter, die tangential oder axial antreibbar ist, weist die Spannvorrichtung nur eine verhältnismäßig geringe axiale Baulänge auf und ist deshalb zum Einbau in Revolverscheiben bestens geeignet. Durch die Flächenberührung der Spannklauen an den Konusflächen während des Spannvorganges tritt zwischen den zusammenwirkenden Flächen eine geringe Flächenpressung und damit ein geringer Verschleiß auf. Gegenüber der eingangs erwähnten Spannvorrichtung lassen sich damit auch wesentlich größere axiale Anpreßkräfte zwischen der Anlagefläche und der Stirnfläche und damit auch eine höhere Steifigkeit zwischen dem Werkzeug und dem Träger erzielen. Die Werkzeuge selbst werden gegenüber den Werkzeugen bei der eingangs erwähnten Spannvorrichtung billiger, denn sie brauchen im Inneren des hohl ausgebildeten Zentrieransatzes lediglich die Konusfläche zum Angriff der Spannklauen und sonst keine weiteren Teile der Spannvorrichtung aufzuweisen.

Weitere vorteilhafte Ausgestaltungen der Erfindung sind in den Unteransprüchen gekennzeichnet.

Die Erfindung ist in folgendem, anhand von in der Zeichnung dargestellten Ausführungsbeispielen näher erläutert. Es zeigen:

Figur 1 ein erstes Ausführungsbeispiel im Axialschnitt, oben in gespannter Stellung und unten in gelöster Stellung,

Figur 2 einen Teilquerschnitt nach der Linie II-II der Figur 1,

Figur 3 die prinzipielle Darstellung einer anderen Betätigungseinrichtung für die Spannmutter,

Figur 4 ein zweites Ausführungsbeispiel im Axialschnitt, oben in gespannter Stellung und unten in gelöster Stellung (Schnitt durch eine Spannklaue 44),

Figur 5 einen Teil-Axialschnitt einer abgewandelten Ausgestaltung des zweiten Ausführungsbeispieles (Schnitt zwischen zwei Spannklauen 44),

Figur 6 einen Teilquerschnitt nach der Linie VI-VI der Figur 5.

In der Zeichnung ist mit 1 ein Werkzeug bezeichnet, welches mit dem Träger 2 über die Spannvorrichtung verbunden werden soll. Der Träger 2 ist die Revolverscheibe einer Werkzeugmaschine, wobei anstelle einer Revolverscheibe auch ein Stern-, Trommel-, Linear-Werkzeugträger oder ein anderer Werkzeugträger vorgesehen sein kann.

Das Werkzeug 1 weist einen hohlen Zentrierzapfen 3 auf, der beim gezeigten Ausführungsbeispiel kegelig ist. Gegebenenfalls kann jedoch dieser Zentrierzapfen auch zylindrisch sein. Der Zentrieransatz 3 ist von einer senkrecht zur Ansatz- bzw. Zentralachse A verlaufenden Anlagefläche 4 umgeben. Der hohl ausgebildete Zentrieransatz 3 weist ferner innen eine Konusfläche 5 auf, die sich zum freien Ansatzende hin konisch verjüngt.

Als Werkzeugaufnahme ist in eine Durchgangsbohrung 6 der Revolverscheibe 2 eine Büchse 7 eingesetzt. Diese Büchse bzw. Werkzeugaufnahme 7 weist eine dem Zentrieransatz 3 angepaßte Aufnahmebohrung 8 auf, an die sich außen eine senkrecht zur Zentralachse verlaufende Stirnfläche 9 anschließt. An diese Stirnfläche 9 soll mittels der Spannvorrichtung die Anlagefläche 4 angepreßt werden. Die Werkzeugaufnahme 7 könnte gegebenenfalls auch direkt in der Revolverscheibe 2 ausgebildet sein, was jedoch herstellungstechnisch aufwendiger wäre.

In der Büchse ist koaxial zur Zentralachse A eine (hohle) Spannhülse angeordnet, die ungefähr zur Hälfte ihrer Länge in den Zentrieransatz 3 hineinragt. Es ist ferner ein die Spannhülse 10 konzentrisch umgebender Spannring 11 vorgesehen. Spannhülse 10 und Spannring 11 sind außen jeweils miteinander zugekehrten Spannkegeln 12, 13 versehen.

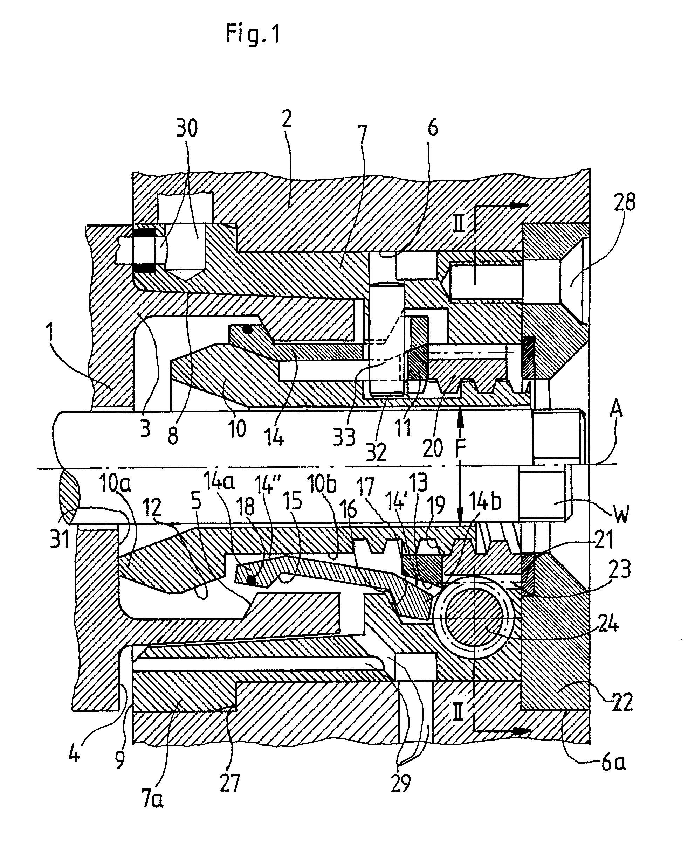

Die Spannhülse 10 und der Spannring 11 sind von mehreren, in gleichen Umfangswinkelabständen angeordneten Spannklauen 14 umgeben, die sich im wesentlichen parallel zur Zentralachse erstrecken. Die Spannklauen 14 stützen sich jeweils mit ihrem vorderen Ende 14a an dem Spannkegel 12 der Spannhülse und mit ihrem hinteren Ende 14b an der Kegelfläche 13 des Spannringes 11 ab. Sie weisen ferner an ihren beiden Enden 14a, 14b einander zugekehrte Spannflächen 15, 16 auf. Die Spannfläche 15 wirkt mit der Konusfläche 5 des Zentrieransatzes 3 zusammen und die Spannfläche 16 mit einer entgegengesetzt gerichteten Konusfläche 17 an der Büchse bzw. Werkzeugaufnahme 7. Die Winkellage der Spannflächen 15 bzw. 16 gegenüber der Zentralachse A entspricht während des eigentlichen Spannvorganges der Winkellage der Konusflächen 5, 17, so daß während des Spannvorganges Flächenberührung zwischen den Spannflächen 15, 16 und den Konusflächen 5, 17 besteht. Die werkzeugseitigen Enden 14a der Spannklauen 14 sind zweckmäßig von einer Ringfeder (Wurmfeder) 18 umgeben. Die Spannhülse 10 ist im Anschluß an den Spannkegel 12 mit einer Eindrehung 10b versehen, in welche die werkzeugseitigen Enden 14a der Spannklauen 14 bei gelöstem Spannring 11 radial nach innen einschwenkbar sind, wie es in Figur 1, unten dargestellt ist. Auf diese Weise kann erreicht werden, daß bei einem relativ kurzen Ausstoßhub der Spannhülse die werkzeugseitigen Enden 14a der Spannklauen 14 um einen verhältnismäßig großen Betrag nach innen schwenkbar sind und die Konusfläche 5 freigeben.

Die Spannhülse 10 ist an ihrem dem Werkzeug abgekehrten hinteren Ende mit einem Gewinde 19 versehen, auf welchem die Spannmutter 20 verschraubbar ist. Die Spannmutter 20 wirkt in einer Drehrichtung mit dem Spannring 11 und in entgegengesetzter Drehrichtung mit einem Anschlagring 21 zusammen, der in den Haltering 22 eingesetzt ist.

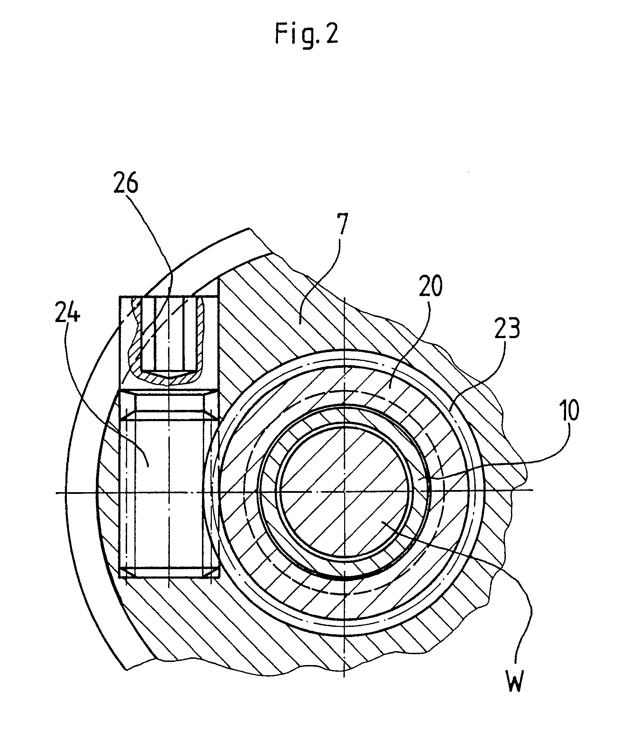

Die Spannmutter 20 ist an ihrem Außenumfang mit einer Verzahnung 23 versehen, in welche bei dem in Figur 1 und 2 dargestellten Ausführungsbeispiel eine Schnecke 24 eingreift. Die Schnecke 24 ist in der Büchse bzw. Werkzeugaufnahme 7 gemäß Figur 2 drehbar jedoch axial unverschiebbar gelagert. Sie kann mittels eines in ihren Innensechskant 26 eingreifenden Schlüssels gedreht werden.

Um die Büchse 7 in der Durchgangsbohrung 6 festzulegen, weist die Büchse 7 einen Flansch 7a auf, der sich an einem Ringabsatz 27 des Trägers 2 abstützt. Die Haltescheibe 22 ist in eine Ansenkung 6a der Durchgangsbohrung 6 eingesetzt und über Halteschrauben 28 mit dem hinteren Ende der Büchse 7 verbunden.

Wie man insbesondere aus Figur 1 erkennen kann, ist innerhalb der Spannhülse ein ausreichend großer durchgehender Freiraum F vorhanden, der nach vorne und hinten offen ist. Durch diesen Freiraum F kann sich infolgedessen die Antriebswelle W oder eine Antriebsstange für ein angetriebenes Werkzeug ungehindert hindurch erstrecken.

Die in der Büchse 7 vorgesehenen Bohrungen 29 dienen zur Zuführung von Druckluft, um den Zentrieransatz 3, die Aufnahmebohrung 8 sowie die Anlagefläche 4 und die Stirnfläche 9 während des Einsetzens des Werkzeuges zu reinigen. Über die Bohrungen 30 kann dem Werkzeug Kühlschmiermittel zugeführt werden. Falls es sich um ein nicht angetriebenes Werkzeug handelt, könnte die Zuführung von Kühlschmiermittel auch über ein durch den Freiraum F ragendes Rohr erfolgen.

Die Wirkungsweise der neuen Spannvorrichtung ist folgende:
Zur Verbindung des Werkzeuges 1 mit dem Träger 2 wird dieses bei gelöster Spannvorrichtung (Figur 1, unten) mit seinem Zentrieransatz 3 in die Aufnahmebohrung 8 eingesetzt. Durch Drehung der Schnecke 24 wird die Spannmutter 20 angetrieben und bewegt den Spannring 11 gemäß Figur 1 nach links zum Werkzeug hin. Der Spannring 11 drückt mit seinem Spannkegel 13 auf die Fläche 14' jeder Spannklaue 14. Hierdurch werden die werkzeugseitigen Enden 14a der Spannklauen 14 entgegen der Kraft der Ringfeder 18 nach außen geschwenkt, bis ihre Spannflächen 15, 16 an den Konusflächen 5, 17 flächig anliegen. Gleichzeitig wird durch die Drehung der Spannmutter 20 die Spannhülse 10 vom Werkzeug wegbewegt und ihre Kegelfläche 12 kommt an der Fläche 14'' des vorderen Endes 14a jeder Spannklaue zur Anlage. Jetzt beginnt der eigentliche Spannvorgang, bei dem die Spannklauen 14 durch die Spannkegel 12, 13 radial nach außen gedrückt werden. Die Spannflächen 15, 16 der Spannklauen wirken ähnlich wie ein Keil auf die Konusflächen 5 und 17 ein. Hierdurch wird die Anlagefläche 4 fest an die Stirnfläche 9 gepreßt. Während des eigentlichen Spannvorganges ändert sich die Winkelstellung der Spannklauen 14 in bezug auf die Zentralachse A nicht, so daß die Spannflächen 15 bzw. 16 ständig Flächenberührung mit den zugehörigen Konusflächen 5 bzw. 17 haben. Die Flächenpressung und der Verschleiß werden hierdurch gering gehalten. Am Ende des Spannvorganges nehmen die Teile der Spannvorrichtung die in Figur 1, oben dargestellte Stellung ein.

Zum Lösen der Spannvorrichtung wird die Spannmutter 20 mittels der Schnecke 24 in entgegengesetzter Richtung gedreht. Hierdurch bewegt sie sich zunächst in axialer Richtung, bis sie am Anschlagring 21 zur Anlage kommt. Bei weiterer Drehung der Spannmutter 20 wird die Spannhülse 10 zum Werkzeug hin nach links verschoben, wodurch zunächst der Spannkegel 12 aus dem Bereich der Spannklauen 14 gelangt. Diese können unter Wirkung der Ringfeder 18 radial nach innen schwenken. Bei weiterer Drehung der Spannmutter 20 kommt ein am freien Ende der Spannhülse 10 vorgesehener axialer Fortsatz an einer Ausstoßfläche 31 des Werkzeuges 1 zur Anlage. Hierdurch wird der Zentrieransatz 3 ein Stück aus der Aufnahmebohrung 8 herausgeschoben, was man auch als Ausstoßen bezeichnet. Der mit seinem radial inneren Ende in eine Axialnut 32 der Spannhülse 10 eingreifende Sperrstift 33 begrenzt hierbei die Ausstoßbewegung der Spannhülse 10 und verhindert außerdem eine Drehung der Spannhülse während der Drehung der Spannmutter 20.

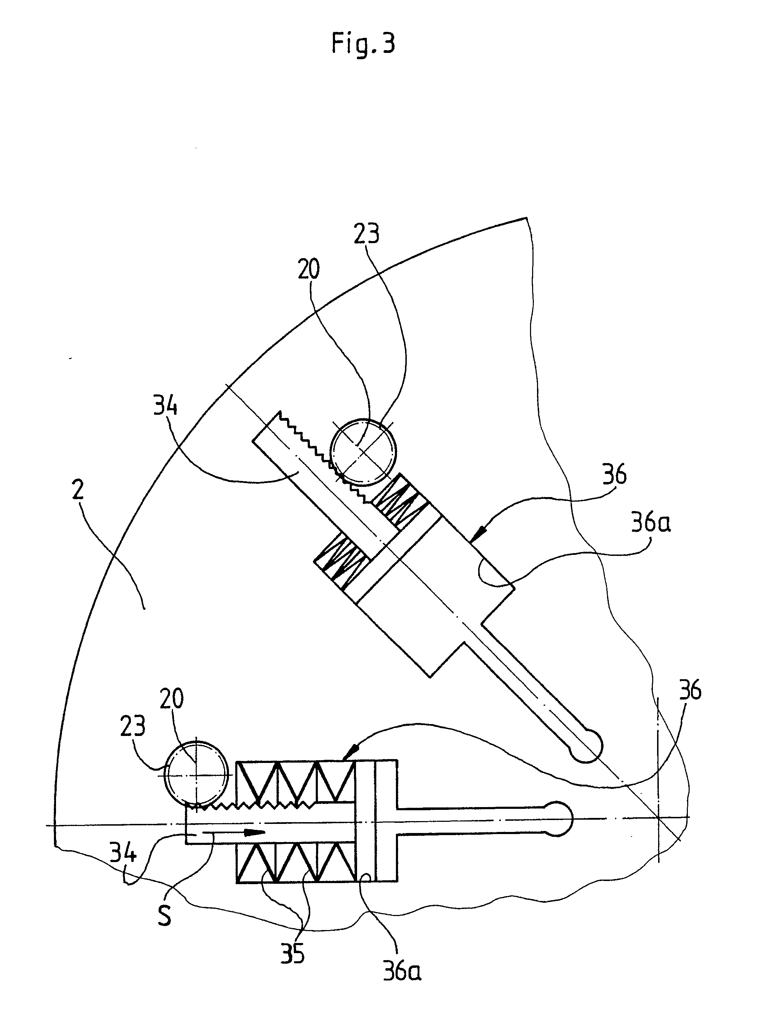

Für automatischen Werkzeugwechsel kann zur Drehung der Spannmutter 20 anstelle der Schnecke 24 die in Figur 3 dargestellte Betätigungseinrichtung vorgesehen sein. Da alle übrigen Teile der Spannvorrichtung in ähnlicher Weise ausgebildet sind, wie bei dem in Figur 1 und 2 dargestellten Ausführungsbeispiel, ist in Figur 3 jeweils nur die Spannmutter 20 mit ihrer Verzahnung 23 dargestellt. Figur 3 zeigt oben die Betätigungseinrichtung in gelöster Stellung der Spannvorrichtung und unten in Spannstellung derselben. Im Träger 2 bzw. auch in der in Figur 3 nicht dargestellten Werkzeugaufnahme 7 ist für jede Spannmutter 20 eine Zahnstange 34 tangential zur Spannmutter 20 verschiebbar und kämmt mit dieser. Die Zahnstange 34 ist durch eine Tellerfeder-Anordnung 35 in Spannrichtung S belastet. Hierdurch wird die Spannmutter 20 in einem Drehsinn gedreht, welche die Spannmutter 20 gegen den Spannring 11 drückt. Zum Lösen der Spannvorrichtung ist eine hydraulische Kolben-Zylinder-Einheit 36 vorgesehen. Indem der Zylinderraum 36a mit Druck beaufschlagt wird, kann die Zahnstange 34 aus ihrer in Figur 3, unten dargestellten Spannstellung entgegen der Kraft der Federanordnung 35 in die in Figur 3, oben dargestellte Lösestellung verschoben und damit die Spannvorrichtung gelöst werden.

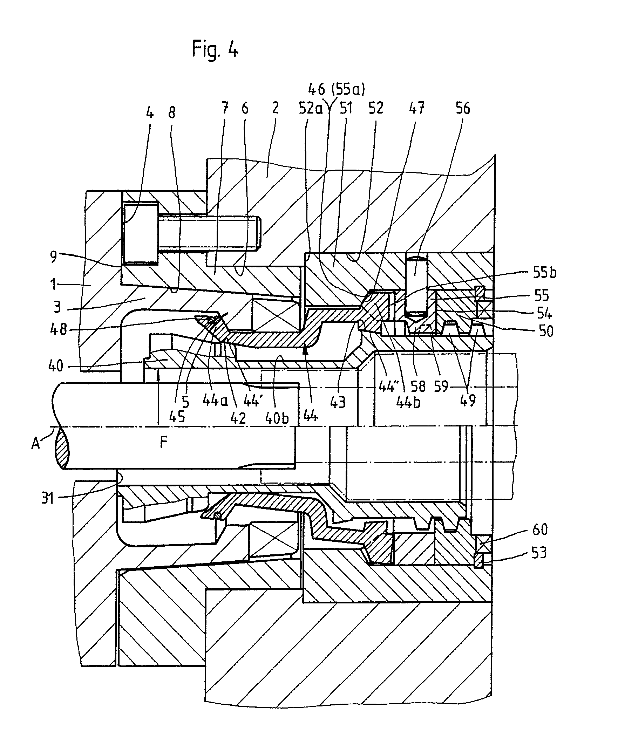

Bei dem in Figur 4 dargestellten Ausführungsbeispiel entsprechen die Ausgestaltungen des Werkzeuges 1 sowie der Werkzeugaufnahme 7 dem in Figur 1 dargestellten Ausführungsbeispiel, weshalb Seite 5a, die letzten zwei Absätze, und Seite 6, 1. Absatz, sinngemäß zutreffen.

In der Büchse 7 ist koaxial zur Zentralachse A eine (hohle) Spannhülse 40 angeordnet, die ungefähr zur Hälfte ihrer Länge in den Zentrieransatz 3 hineinragt. Die Spannhülse ist außen mit zwei in axialem Abstand voneinander angeordneten Spannkegeln 42, 43 versehen, die gleichgerichtet sind, d.h. beide vom Werkzeug 1 weg verjüngt sind. Die Spannhülse 40 ist von mehreren, in gleichen Umfangswinkelabständen angeordneten Spannklauen 44 umgeben, die sich im wesentlichen parallel zur Zentralachse A erstrecken. Die Spannklauen 44 stützen sich jeweils mit ihren vorderen Enden 44a an dem Spannkegel 42 und mit ihren hinteren Enden 44b an dem Spannkegel 43 ab. Sie weisen ferner an ihren beiden Enden 44a, 44b einander zugekehrte Spannflächen 45, 46 auf. Die Spannfläche 45 wirkt mit der Konusfläche 5 des Zentrieransatz 3 zusammen und die Spannfläche 46 mit einer entgegengesetzt gerichteten Konusfläche 47 an einer zweiten Büchse 51, die von hinten in eine Bohrung 52 des Trägers 2 eingesetzt ist und sich an einer Schulter 52a der Bohrung abstützt. Gegebenenfalls könnte die Konusfläche 47 auch wie beim ersten Ausführungsbeispiel an der Büchse 7 oder direkt im Träger 2 vorgesehen sein. Die Winkellage der Spannflächen 45 bzw. 46 gegenüber der Zentralachse A entspricht während des eigentlichen Spannvorganges der Winkellage der Konusflächen 5, 47, so daß während des Spannvorganges Flächenberührung zwischen den Spannflächen 45, 46 und den Konusflächen 5, 47 besteht. Die werkzeugseitigen Enden 44a der Spannklauen 44 sind zweckmäßig von einer Ringfeder (Wurmfeder) 48 umgeben. Wie beim ersten Ausführungsbeispiel ist die Spannhülse 40 im Anschluß an den Spannkegel 42 mit einer Eindrehung 40b versehen, in welche die werkzeugseitigen Enden 44a der Spannklauen 44 bei gelöster Spannmutter 50 radial nach innen einschwenkbar sind, wie es in Figur 4, unten, dargestellt ist.

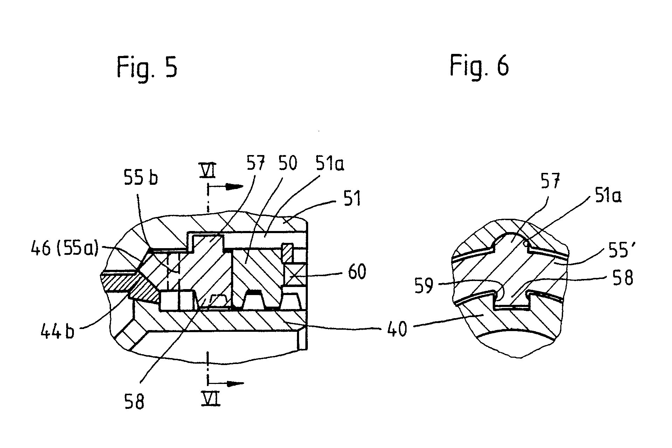

Die Spannhülse 40 ist an ihrem, dem Werkzeug 1 abgekehrten hinteren Ende mit einem Gewinde 49 versehen, auf welchem die Spannmutter 50 verschraubbar ist. Nach hinten stützt sich die Spannmutter 50 an einem (Seeger-) Sicherungsring 53 oder dgl. ab. Nach vorne stützt sich die Spannmutter 50 an einer gegenüber dem Träger 2 bzw. der Werkzeugaufnahme 7 ortsfesten Ringfläche 54 ab. Diese Ringfläche ist bei den in Figur 4 und 5 dargestellten Ausführungsbeispielen jeweils an einem Widerlagerring 55, 55' angeordnet, der seinerseits an seinem vorderen Ende eine Konusfläche 55a aufweist, mit welcher er sich an der Konusfläche 47 der Büchse 51 abstützt. Der Widerlagerring 55, 55' weist eine der Anzahl der Spannklauen 44 entsprechende Anzahl von axialen Schlitzen 55b auf, in welche die hinteren Enden 44b der Spannklauen eingreifen. Hierdurch wird einerseits eine Abstützung des Widerlagerringes 54 bzw. 55 bzw. 55' und der hinteren Enden 44b der Spannklauen 44 an ein und derselben Konusfläche 47 ermöglicht, und andererseits werden die Spannklauen durch den Widerlagerring 55 bzw. 55' in ihren gleichen Winkelabständen gehalten. Damit sich der Widerlagerring 55 bzw. 55' bei Drehung der Spannmutter 50 nicht mit dieser mitdreht, ist gemäß Figur 4 ein in die Büchse 51 eingreifender radialer Haltestift 56 vorgesehen. Bei dem in Figur 5 und 6 dargestellten Ausführungsbeispiel weist der Widerlagerring eine radial nach außen gerichtete Haltenase 57 auf, die in eine Axialnut 51a der Büchse 51 eingreift und damit den Widerlagerring gegen Verdrehung sichert. Um auch die Spannhülse 44 gegen Verdrehung zu sichern, weist jeder der Widerlagerringe 55, 55' eine radial nach innen gerichtete Nase 58 auf, die in eine Axialnut 59 der Spannhülse 44 eingreift. Dies ist aus Figur 6 zu entnehmen.

Die Spannmutter 50 ist an ihrem axial hinteren Ende mit Mitnehmerklauen 60 versehen. An diesen Mitnehmerklauen 60 kann ein nicht dargestellter Drehantrieb, beispielsweise ein hydraulisch betätigbarer Drehzylinder, ein elektrischer Drehmagnet oder auch ein Elektroschrauber angreifen. Die in Figur 4 - 6 dargestellten Ausführungsbeispiele haben den Vorteil, daß für das Lösen bzw. Spannen der Spannvorrichtung die Spannmutter 50 nur um etwa 180° gedreht zu werden baucht.

Die Wirkungsweise der in Figur 4 - 6 dargestellten Spannvorrichtung ist folgende:
Zur Verbindung des Werkzeuges 1 mit dem Träger 2 wird dieses bei gelöster Spannvorrichtung (Figur 4, unten) mit seinem Zentrieransatz 3 in die Aufnahmebohrung 8 eingesetzt. Durch den an den Mitnehmerklauen 60 angreifenden (nicht dargestellten) Drehantrieb wird die Spannmutter 50 gedreht. Da sie durch die Ringfläche 54 des Widerlagerringes 55, der sich seinerseits mit seiner Konusfläche 55a an der Konusfläche 47 abstützt, gegen axiale Verschiebung gesichert ist, wird die Spannhülse 40 gemäß Figur 1 nach rechts bewegt. Hierdurch werden die werkzeugseitigen Enden 44a der Spannklauen 44 entgegen der Kraft der Ringfeder 48 nach außen geschwenkt, bis ihre Spannflächen 45, 46 an den Konusflächen 5, 47 flächig anliegen. Die Spannhülse drückt nunmehr mit ihren Spannkegeln 42, 43 auf die Flächen 44', 44" und es beginnt der eigentliche Spannvorgang, bei dem die Spannklauen 44 durch die Spannkegel 42, 43 radial nach außen gedrückt werden. Die Spannflächen 45, 46 der Spannklauen 44 wirken ähnlich wie ein Keil auf die Konusflächen 5, 47 ein. Hierdurch wird die Anlagefläche 4 fest an die Stirnfläche 9 gepreßt. Während des eigentlichen Spannvorganges besteht zwischen den Spannflächen 45 bzw. 46 und den zugehörigen Konusflächen 5 bzw. 47 Flächenberührung, wodurch die Flächenpressung und der Verschleiß gering gehalten werden. Am Ende des Spannvorganges nehmen die Teile der Spannvorrichtung die in Figur 4, oben, dargestellte Stellung ein.

Das Lösen der Spannvorrichtung erfolgt durch Drehen der Spannmutter 50 in entgegengesetzter Drehrichtung. Alle zuvor beschriebenen Teile bewegen sich nun in entgegengesetzter Richtung. Wenn die Spannklauen 44 durch die Wirkung der Ringfeder 18 nach innen geschwenkt sind, kommt ein am freien Ende der Spannhülse 40 vorgesehener axialer Fortsatz an der Ausstoßfläche 31 des Werkzeuges zur Anlage. Hierdurch wird der Zentrieransatz 3 ein Stück aus der Aufnahmebohrung 8 herausgedrückt und das Lösen des Werkzeuges ist damit beendet.

**Patentansprüche**

1. Spannvorrichtung zum Einspannen eines Werkzeuges in einem Träger, insbesondere in einer Revolverscheibe einer Werkzeugmaschine, mit einem am Werkzeug vorgesehenen, kegeligen oder zylindrischen, hohlen Zentrieransatz und einer an diesen anschließenden, senkrecht zur Zentralachse der Spannvorrichtung verlaufenden Anlagefläche, mit einer im Träger vorgesehenen Werkzeugaufnahme, die eine dem Zentrieransatz angepaßte Aufnahmebohrung und eine an diese anschließende, sich senkrecht zur Zentralachse erstreckende Stirnfläche aufweist, an welche die Anlagefläche anpreßbar ist, mit mehreren radial zur Zentralachse beweglichen, am Zentrieransatz und an einer gegenüber dem Träger bzw. der Werk-zeugaufnahme ortsfesten Konusfläche angrei-fenden Spannklauen, die mittels einer axial beweglichen Spannanordnung radial nach außen drückbar sind, wobei die Spannanordnung eine koaxial zur Zentralachse bewegliche, auch in den Zentrieransatz angreifende Spannhülse umfaßt, die mit einem Spannkegel versehen ist, der von einem zweiten Spannkegel in axialem Abstand angeordnet ist, wobei die Spannklauen konzentrisch zur Spannhülse und in Spannstellung im wesentlichen parallel zur Zentralachse angeordnet sind und sich jeweils mit einem Ende an den Spannkegeln abstützen, und wobei die Spannklauen an ihren beiden Enden Spannflächen aufweisen, deren Winkellage bezüglich der Zentralachse der Konusfläche der Werkzeugaufnahme sowie einer entgegengesetzt zu dieser gerichteten Konusfläche im Zentrieransatz angepaßt ist, so daß während des eigentlichen Spannvorganges Flächenberührung zwischen den Spannflächen und den Konusflächen besteht, **dadurch ge-kennzeichnet,** daß die Spannanordnung fer-ner einen entgegengesetzt zur Spannhülse (10) verschiebbaren Spannring (11) umfaßt, der den zweiten Spannkegel (13) trägt, welcher dem ersten Spannkegel (12) zugekehrt ist, und daß der Spannring (11) mittels einer auf der Spannhülse (10) verschraubbaren Spannmutter (20) relativ zur Spannhülse (10) axial verschiebbar ist.

2. Spannvorrichtung zum Einspannen eines Werkzeuges in einem Träger, insbesondere in einer Revolverscheibe einer Werkzeugmaschine, mit einem am Werkzeug vorgesehenen, kegeligen oder zylindrischen, hohlen Zentrieransatz und einer an diesen anschließenden, senkrecht zur Zentralachse der Spannvorrichtung verlaufenden Anlagefläche, mit einer im Träger vorgesehenen Werkzeugaufnahme, die eine dem Zentrieransatz angepaßte Aufnahmebohrung und eine an diese anschließende, sich senkrecht zur Zentralachse erstreckende Stirnfläche aufweist, an welche die Anlagefläche anpreßbar ist, mit mehreren radial zur Zentralachse beweglichen, am Zentrieransatz und an einer gegenüber dem Träger bzw. der Werk-zeugaufnahme ortsfesten Konusfläche angrei-fenden Spannklauen, die mittels einer axial beweglichen Spannanordnung radial nach außen drückbar sind, wobei die Spannanordnung eine koaxial zur Zentralachse bewegliche, auch in den Zentrieransatz eingreifende Spannhülse umfaßt, die mit zwei in axialem Abstand voneinander angeordneten, gleichgerichteten Spannkegeln versehen ist, wobei die Spannklauen konzentrisch zur Spannhülse und in Spannstellung im wesentlichen parallel zur Zentralachse angeordnet sind und sich jeweils mit einem Ende an den Spannkegeln abstützen, und wobei die Spannklauen an ihren beiden Enden Spannflächen aufweisen, deren Winkellage bezüglich der Zentralachse der ortsfesten Konusfläche sowie einer entgegengesetzt zu dieser gerichteten Konusfläche im Zentrieransatz angepaßt ist, so daß während des eigentlichen Spannvorganges Flächenberührung zwischen den Spannflächen und den Konusflächen besteht, **dadurch gekennzeichnet,** daß die Spannhülse (40) mittels einer auf ihr verschraubbaren, sich an einer gegenüber dem Träger (2) bzw. der Werkzeugaufnahme ortsfesten Ringfläche (54) abstützenden Spannmutter (50) axial verschiebbar ist.

3. Spannvorrichtung nach Anspruch 1, **dadurch gekennzeichnet,** daß der axiale Verstellweg der Spannmutter (20) in der vom Werkzeug (1) weg gerichteten Richtung durch einen Anschlagring (21) begrenzt ist und daß am freien Ende der Spannhülse (10) ein axialer Fortsatz (10a) vorgesehen ist, der zum Lösen des Werkzeuges (1) mit einer an diesem vorgesehenen Ausstoßfläche (31) zusammenwirkt.

4. Spannvorrichtung nach Anspruch 1 oder 3, **dadurch gekennzeichnet,** daß die Spannmutter (20) an ihrem Außenumfang mit einer Verzahnung (23) versehen ist, in welche eine in der Werkzeugaufnahme (7) gelagerte Schnecke (24) eingreift.

5. Spannvorrichtung nach mindestens einem der vorhergehenden Ansprüche, **dadurch gekennzeichnet,** daß die Spannmutter (20) an ihrem Außenumfang mit einer Verzahnung (23) versehen ist, und daß im Träger (2) oder der Werkzeugaufnahme (7) eine Zahnstange (34) tangential zur Spannmutter verschiebbar ist.

6. Spannvorrichtung nach Anspruch 4, **dadurch gekennzeichnet,** daß die Zahnstange (34) in Spannrichtung (S) durch eine Federanordnung (35) belastet ist.

7. Spannvorrichtung nach Anspruch 6, **dadurch gekennzeichnet,** daß zur Verschiebung der Zahnstange (34) entgegen der Kraft der Federanordnung (35) eine Kolben-Zylinder-Einheit (36) vorgesehen ist.

8. Spannvorrichtung nach Anspruch 1 oder 2, **dadurch gekennzeichnet,** daß die werkzeugseitigen Enden (14a, 44a) der Spannklauen (14, 44) von einer Ringfeder (18, 48) umschlossen sind und daß die Spannhülse (10, 40) im Anschluß an ihren Spannkegel (12, 42) eine Eindrehung (10b, 40b) aufweist, in welche die werkzeugseitigen Enden (14a, 44a) der Spannklauen (14, 44) bei gelöster Spannmutter (20, 50) radial nach innen einschwenkbar sind.

9. Spannvorrichtung nach mindestens einem der vorhergehenden Ansprüche, **dadurch ge-**

**kennzeichnet,** daß die Werkzeugaufnahme durch eine in eine Bohrung (6) des Trägers (2) einsetzbare Büchse (7) gebildet ist.

10. Spannvorrichtung nach Anspruch 9, **dadurch gekennzeichnet,** daß die Büchse (7) an ihrem werkzeugseitigen, vorderen Ende mit einem Flansch (7a) versehen ist, der sich an einem Ringabsatz (27) in der als Durchgangsbohrung ausgebildeten Bohrung (6) des Trägers (2) abstützt und daß an der dem Werkzeug (1) abgekehrten Ende der Durchgangsbohrung ein Haltering (22) angeordnet ist, der über eine Schraubverbindung (28) mit dem hinteren Ende der Büchse (7) verbunden ist.

11. Spannvorrichtung nach Anspruch 1 und 9, **dadurch gekennzeichnet,** daß die Stirnfläche (9) an der Büchse (7) vorgesehen ist.

12. Spannvorrichtung nach Anspruch 2, **dadurch gekennzeichnet,** daß die ortsfeste Ringfläche (54) an einem Widerlagerring (55, 55') angeordnet ist, der gegenüber dem Träger (2) gegen axiale Verschiebung und Verdrehung gesichert ist.

13. Spannvorrichtung nach Anspruch 12, **dadurch gekennzeichnet,** daß der Widerlagerring (55) in einer ihn konzentrisch umschließenden Büchse (51) angeordnet ist, die von der der Werkzeugaufnahme (7) abgekehrten Rückseite des Trägers (2) in eine Bohrung (52) desselben eingesetzt ist.

14. Spannvorrichtung nach Anspruch 13, **dadurch gekennzeichnet,** daß die Bohrung (52) eine Schulter (52a) aufweist, an welcher sich die Büchse (51) abstützt.

15. Spannvorrichtung nach Anspruch 13 oder 14, **dadurch gekennzeichnet,** daß in der Büchse (51) die Konusfläche (47) für die Abstützung der Spannflächen (46) der Spannklauen (44) angeordnet ist.

16. Spannvorrichtung nach Anspruch 12 und 15, **dadurch gekennzeichnet,** daß der Widerlagerring (55, 55') an seinem vorderen Ende eine Konusfläche (55a) aufweist, mit welcher er sich an der Konusfläche (47) der Büchse (51) abstützt, und daß der Widerlagerring (55, 55') eine der Anzahl der Spannklauen entsprechende Anzahl von axialen Schlitzen (55b) aufweist, in welche die hinteren Enden (44b) der Spannklauen (44) eingreifen.

17. Spannvorrichtung nach mindestens einem der Ansprüche 12 - 16, **dadurch gekennzeichnet,** daß der Widerlagerring (55) durch einen in eine Bohrung der Büchse (51) und den Widerlagerring eingreifenden, radialen Haltestift (56) gegen Drehung gesichert ist.

18. Spannvorrichtung nach mindestens einem der Ansprüche 12 - 16, **dadurch gekennzeichnet,** daß der Widerlagerring eine radial nach außen gerichtete Haltenase (57) aufweist, die in eine Axialnut (51a) der Büchse (51) eingreift.

19. Spannvorrichtung nach Anspruch 17 oder 18, **dadurch gekennzeichnet,** daß der Widerlagerring (55, 55') eine radial nach innen gerichtete Nase (58) aufweist, die in eine Axialnut (59) der Spannhülse (44) eingreift.

20. Spannvorrichtung nach Anspruch 1 oder 2, **dadurch gekennzeichnet,** daß die Spannmutter (20, 50) an ihrem axial hinteren Ende mit Mitnehmerklauen (60) für den Angriff eines Drehantriebes versehen ist.

## Fig.1

Fig.2

# Fig. 3

Fig. 4

## Fig. 5

## Fig. 6